# FASCICULE DE BREVET EUROPEEN

(11) **EP 2 812 936 B1**
(45) Date de publication et mention de la délivrance du brevet: **09.05.2018**
(21) Numéro de dépôt: 13703793.3
(22) Date de dépôt: 07.02.2013
(51) Int. Cl.: H01M 2/02, H01G 2/10, H01G 9/10, H01G 9/08, H01G 11/84, H01G 11/78, H01G 11/80, H01G 13/00, H01M 2/04

(54) **COUVERCLE POUR ENSEMBLE DE STOCKAGE D'ENERGIE, ENSEMBLE DE STOCKAGE D'ENERGIE COMPORTANT LEDIT COUVERCLE, ET PROCEDE DE FABRICATION D'UN TEL ENSEMBLE DE STOCKAGE D'ENERGIE**
ABDECKUNG FÜR EINE ANORDNUNG ZUR SPEICHERUNG ELEKTRISCHER ENERGIE, ANORDNUNG ZUR SPEICHERUNG ELEKTRISCHER ENERGIE BEINHALTEND DIE SOGENANNTE ABDECKUNG UND VERFAHREN ZUR HERSTELLUNG EINER SOLCHEN ANORDNUNG ZUR SPEICHERUNG ELEKTRISCHER ENERGIE
COVER FOR AN ASSEMBLY FOR THE STORAGE OF ELECTRICAL ENERGY, ASSEMBLY FOR THE STORAGE OF ELECTRICAL ENERGY COMPRISING SAID COVER AND PROCESS OF MANUFACTURE OF SUCH AN ASSEMBLY FOR THE STORAGE OF ELECTRICAL ENERGY

(30) Priorité: 07.02.2012 FR 1251138
(43) Date de publication de la demande: 17.12.2014
(73) Titulaire: Blue Solutions, 29500 Ergué Gabéric (FR)
(72) Inventeur: VIGNERAS, Erwan, 29000 Quimper (FR)
(74) Mandataire: Regimbeau
(86) Numéro de dépôt international: PCT/EP2013/052448
(87) Numéro de publication internationale: WO 2013/117654

(56) Documents cités:
- EP-A1- 0 836 237
- EP-A1- 2 385 566
- JP-A- S59 175 553
- US-A- 5 348 815
- US-A- 5 798 906

## Description

### DOMAINE TECHNIQUE

La présente invention concerne le domaine technique des ensembles de stockage d'énergie électrique.

Plus particulièrement, la présente invention concerne un couvercle d'ensemble de stockage d'énergie, un ensemble de stockage d'énergie et un procédé de fabrication pour un tel ensemble de stockage d'énergie.

On entend, dans le cadre de la présente invention, par « ensemble de stockage d'énergie électrique », soit un condensateur (i.e. un système passif comprenant deux électrodes et un isolant), soit un supercondensateur (i.e. un système passif comprenant au moins deux électrodes, un électrolyte et au moins un séparateur), soit une batterie (i.e. un système comprenant une anode, une cathode et une solution d'électrolyte entre l'anode et la cathode), par exemple de type batterie au lithium.

### ETAT DE LA TECHNIQUE

On connaît de l'état de la technique un ensemble de stockage d'énergie comprenant un couvercle placé à l'intérieur d'une enveloppe de l'ensemble de stockage d'énergie, à une extrémité ouverte d'une telle enveloppe, le couvercle comprenant une paroi latérale destinée à être située à l'intérieur d'une paroi latérale de l'enveloppe, en regard de celle-ci. Une gorge est ménagée dans la paroi latérale du couvercle et la paroi latérale de l'enveloppe est emboutie pour être enfoncée dans la gorge et repliée à l'extrémité du couvercle, ce qui permet de maintenir l'enveloppe de l'ensemble de stockage d'énergie fermée.

Le document EP 2 104 122 décrit par exemple une étape de sertissage mécanique ou bouterollage consistant à déformer l'enveloppe tubulaire pour la plier contre le couvercle. Une pièce d'étanchéité de type élastomère - telle qu'un joint - est alors comprimée entre le couvercle et l'enveloppe pour assurer l'étanchéité au liquide et au gaz.

Un tel ensemble de stockage d'énergie est fermé de façon satisfaisante. Toutefois, on cherche, pour pouvoir augmenter la capacité volumique d'un module de stockage d'énergie comprenant généralement une pluralité d'ensembles de stockage d'énergie, à diminuer l'encombrement de l'enveloppe de chaque ensemble de stockage d'énergie.

Le document US 5 798 906 décrit un procédé de fabrication d'un ensemble de stockage dans lequel le couvercle est positionné de sorte que des zones de couplage soient en regard l'une de l'autre, le procédé comprenant une étape de fermeture consistant à appliquer une force de compression à l'enveloppe externe de l'ensemble de stockage.

Un des buts de l'invention est donc de prévoir un couvercle qui permette d'assurer une fermeture satisfaisante de l'ensemble de stockage tout en diminuant l'encombrement de l'enveloppe et en augmentant de ce fait la capacité volumique de l'ensemble.

### RESUME DE L'INVENTION

A cet effet on propose un couvercle pour un ensemble de stockage d'énergie, destiné à être inséré à une extrémité d'une enveloppe dans lequel est placé un élément capacitif de l'ensemble, le couvercle comportant au moins une paroi latérale destinée à être placée en regard d'au moins une paroi latérale de l'enveloppe et deux parois d'extrémité, une pluralité de cavités étant ménagées dans le couvercle, au moins une première cavité débouchant sur la paroi latérale et une paroi d'extrémité et au moins une deuxième cavité débouchant sur la paroi latérale et l'autre paroi d'extrémité, la ou les premières cavités débouchant sur la paroi latérale dans une ou des premières portions s'étendant sur une partie du pourtour de la ou des parois latérales alors que la ou les deuxièmes cavités débouchent dans une ou des deuxièmes portions s'étendant sur une partie du pourtour de la ou des parois latérales.

Pour solidariser un couvercle selon l'invention et l'enveloppe, on replie la paroi latérale de l'enveloppe à son extrémité dans les portions situées en face des cavités situées à l'extrémité du couvercle (débouchant sur la paroi d'extrémité extérieure du couvercle) et on emboutit l'enveloppe dans les parties situées en faces des autres cavités (débouchant sur la paroi d'extrémité intérieure du couvercle).

En agençant le couvercle de cette façon, on peut diminuer son épaisseur car la somme des épaisseurs des deux cavités peut être inférieure à l'épaisseur d'une gorge ménagée entièrement dans la partie latérale. Une telle gorge nécessite en effet une certaine épaisseur minimale pour que la paroi latérale repliée de la paroi latérale de l'enveloppe puisse venir se loger dans la gorge, cette contrainte disparaissant avec l'architecture du couvercle selon l'invention.

En outre, l'architecture du couvercle selon l'invention permet d'éviter les ondulations de l'extrémité de la paroi latérale de l'enveloppe repliée qui pourraient se produire si les cavités du couvercle s'étendaient sur tout le pourtour du couvercle. En effet, dans ce cas, lorsqu'on replie la paroi latérale de l'enveloppe à l'extrémité du couvercle, le diamètre de l'enveloppe est diminué à son extrémité ce qui induit l'apparition d'ondulations selon la direction normale à la paroi d'extrémité du couvercle lorsque l'enveloppe est repliée sur tout son pourtour. Les cavités s'étendant seulement sur une partie du pourtour du couvercle, la diminution du diamètre du couvercle à son extrémité est moindre et ce phénomène d'ondulations est atténué voire éliminé.

De plus, les cavités permettant de retenir le couvercle selon une direction et celles permettant de le retenir selon la direction opposée étant décorrélées, on peut les concevoir de façon indépendante, de sorte qu'elles s'adaptent mieux aux besoins relatifs au fonctionnement de l'ensemble. En effet, on peut rendre dissymétrique la taille et le nombre des cavités débouchant sur les différentes parois d'extrémité en fonction des efforts susceptibles de s'exercer sur l'ensemble. Ainsi, on peut pourvoir la face d'extrémité externe de plus de cavités ou de cavités présentant une portion angulaire totale plus importante que la face d'extrémité interne puisque les efforts dus à une surpression de l'ensemble au cours de sa vie sont potentiellement très importants

On notera également qu'un tel couvercle selon l'invention est plus simple et moins onéreux à fabriquer puisqu'il peut être facilement moulé contrairement à un couvercle comportant une gorge, posant des problèmes de démoulage.

On notera également qu'un couvercle selon ce mode de réalisation ne rend pas l'assemblage du couvercle et de l'élément capacitif, généralement effectué par soudage LASER, plus complexe que dans l'état de la technique puisque certaines portions de la face d'extrémité, dépourvue de cavité, ont la même configuration que selon l'état de la technique et s'étendent jusqu'à l'extrémité de l'élément bobiné, assurant ainsi une bonne conduction électrique entre l'élément bobiné et le couvercle.

Le couvercle selon l'invention peut comprendre l'une ou plusieurs des caractéristiques suivantes :
- les première et deuxième portions de la paroi latérale (dans lesquelles sont respectivement ménagées les première et deuxième cavités) sont distinctes, pour éviter de fragiliser particulièrement une zone du couvercle. Autrement dit, les cavités sont décalées angulairement dans un plan correspondant au plan d'extrémité. Elles ne sont donc pas totalement superposées selon la direction normale aux parois d'extrémité mais peuvent se chevaucher. Cela signifie qu'une droite s'étendant sur la paroi latérale selon la direction normale à la paroi d'extrémité pour intersecter une première cavité, respectivement deuxième cavité, peut intersecter également une deuxième, respectivement première, cavité. Si deux cavités sont superposées, toute droite intersectant une (première, respectivement deuxième) cavité intersectera une autre (deuxième, respectivement première) cavité. Si deux cavités se chevauchent, certaines des droites intersecteront une autre cavité mais d'autres n'intersecteront aucune autre cavité.
- de préférence, les cavités sont disposées de façon à être en quinconce. Elles ne sont alors pas du tout superposées selon une direction normale aux parois d'extrémité et ne présentent aucune portion angulaire en commun. Ainsi, toute droite s'étendant sur la paroi latérale selon la direction normale à la paroi d'extrémité intersectant une cavité donnée n'intersecte aucune autre cavité,
- la somme des épaisseurs d'au moins une (ou une des) première(s) cavité(s) et d'au moins une (ou une des) deuxième(s) cavité(s) (selon la direction normale à la paroi d'extrémité) peut alors être supérieure à l'épaisseur du couvercle (selon cette direction), ce qui permet une liberté de conception supplémentaire afin de diminuer encore l'épaisseur du couvercle. Les cavités peuvent notamment constituer chacune plus de la moitié de la hauteur du couvercle,
- en variante, la ou les parois latérales du couvercle peut comprendre une partie centrale s'étendant sur tout le pourtour de la ou des parois latérales du couvercle et dépourvue de cavité, ce qui permet de mieux assurer l'étanchéité du couvercle,
- au moins l'une des cavités peut être d'épaisseur (selon la direction normale aux parois d'extrémités) constante. En variante, au moins une des cavités peut être d'épaisseur variable. Elle peut par exemple présenter un profil en arc de cercle ou en vagues dans le plan de la ou des parois latérales,
- la dimension de la cavité selon la direction normale à la paroi latérale peut être constante ou variable,
- le couvercle peut être par exemple de forme générale cylindrique, les parois d'extrémité formant alors les bases du cylindre. Il peut également être de forme parallélépipédique,
- le couvercle est réalisé au moins partiellement en un matériau électriquement conducteur, notamment un matériau métallique. Le couvercle pourrait également être réalisé partiellement ou intégralement en un matériau plastique, par exemple.

L'invention a également pour objet un ensemble de stockage d'énergie comprenant un élément capacitif logé dans une enveloppe externe comportant au moins une paroi latérale entourant l'élément capacitif et ouverte à au moins une de ses extrémités, et au moins un couvercle, chaque couvercle étant inséré dans l'enveloppe à sa ou ses extrémités ouvertes, au moins un couvercle étant selon l'invention et le contour de la ou des parois latérales de l'enveloppe suivant le contour de la ou des parois latérales du couvercle.

L'enveloppe peut être fermée à une de ses extrémités ou être associée à un couvercle à chacune de ses extrémités, l'un des couvercles ou les deux couvercles étant selon l'invention.

L'ensemble de stockage peut comprendre un joint d'étanchéité interposé entre la paroi latérale du couvercle et celle de l'enveloppe.

L'enveloppe est de préférence réalisée en un matériau conducteur, notamment métallique. Elle peut être aussi réalisée en un matériau isolant comportant un revêtement conducteur.

L'invention a également pour objet un procédé de fabrication d'un ensemble de stockage comprenant :
- une enveloppe externe comportant une zone de couplage, l'enveloppe externe étant ouverte à au moins l'une de ses extrémités,
- au moins un couvercle selon l'invention destiné à être inséré dans l'extrémité ouverte de l'enveloppe externe, le couvercle comportant une zone de couplage comprenant au moins une paroi d'une cavité du couvercle, le couvercle étant positionné de sorte que les zones de couplage soient en regard l'une de l'autre, le procédé comprenant une étape de fermeture consistant à appliquer une force de compression à l'enveloppe externe de l'ensemble de stockage de sorte qu'elle vienne au contact du couvercle au niveau des zones de couplage afin de fermer par coopération de forme l'extrémité ouverte de l'enveloppe externe avec le couvercle.

Le couvercle et l'enveloppe peuvent être assemblés par sertissage et/ou emboutissage mécanique, éventuellement également avec interposition de colle.

Dans un mode de réalisation préférentiel, l'étape de fermeture consiste à appliquer une force magnéto-mécanique sans contact à l'enveloppe externe.

Ce procédé permet, en fonction des paramètres utilisés en cours de fabrication, de :
- sertir le couvercle et l'enveloppe externe, ou
- souder l'enveloppe externe et le couvercle, auquel cas il y a continuité des matières des deux pièces et diffusion des atomes d'une pièce dans l'autre.

Ainsi, le procédé permet notamment l'assemblage de pièces réalisées dans des matériaux électriquement conducteurs ayant des points de fusion différents, ce qui n'est pas possible avec des dispositifs de soudure traditionnels.

Les avantages du procédé selon l'invention sont les suivants :
- la durée de l'étape de fermeture est très courte, typiquement inférieure à une seconde, ce qui permet au procédé d'être adapté au grand volume de production ;
- réchauffement des pièces constituant l'ensemble de stockage est très faible, ce qui permet d'une part de ne pas endommager le ou les éléments bobinés situés à l'intérieur de l'enveloppe externe et d'autre part laisse la possibilité de réaliser certaines étapes telles que l'imprégnation préalablement à l'étape de fermeture, ce qui permet d'éviter des étapes supplémentaires de fermeture de l'ensemble.
- lors de la mise en oeuvre de l'étape de fermeture, la détente se créant à l'interface entre le couvercle et l'enveloppe externe est telle qu'elle induit un jet de gaz - comparable à un plasma - qui décape les surfaces à assembler : il n'est donc pas nécessaire de préparer les surfaces de l'enveloppe externe et du couvercle préalablement à l'étape de fermeture ;
- les coûts associés à la mise en oeuvre du procédé restent faible, car d'une part l'outil permettant de réaliser l'étape de fermeture peut être utilisé avec des enveloppes externes et des couvercles de diamètres différents, et d'autre part les opérations de maintenance de cet outil sont limitées car l'outil ne comprend aucune partie en mouvement, ce qui limite son usure.

Dans un mode de réalisation préférentiel, la force magnéto-mécanique est appliquée à l'aide d'un dispositif de génération d'une impulsion magnétique, le procédé comprenant une étape de positionnement de l'enveloppe et du couvercle de sorte qu'ils soient entourés au moins partiellement par le dispositif de génération, notamment un inducteur du dispositif. Ceci permet de limiter les risques de dégradation d'un élément bobiné contenu dans l'enveloppe par compression des parois de l'enveloppe sur celui-ci. L'inducteur comporte alors notamment une bobine agencée de sorte à entourer partiellement l'ensemble de stockage au niveau des zones de couplage du couvercle et de l'enveloppe.

L'impulsion est de préférence générée à une énergie comprise entre 5 et 20 kJ. On alimente notamment l'inducteur avec une tension électrique comprise entre 5 et 6 kV et un courant électrique compris :
∘ entre 150A et 250A pour réaliser un sertissage,
∘ entre 450A et 600A pour réaliser un soudage

Le couvercle et l'enveloppe sont de préférence positionnés dans le dispositif de sorte que la force de compression sans contact s'applique uniquement sur le couvercle et l'enveloppe au niveau des zones de couplage

Le procédé peut également comprendre, préalablement à l'étape de fermeture, une étape consistant à positionner un joint - réalisé par exemple en matériau plastique (par exemple un polymère ou un élastomère ou un mélange de polymère et d'élastomère) ou céramique - entre les zones de couplage du couvercle et de l'enveloppe externe : ce joint permet d'assurer au moins l'une des deux fonctions suivantes :
∘ étanchéité à l'interface entre le couvercle et l'enveloppe externe,
∘ isolation électrique du couvercle et de l'enveloppe externe, notamment lorsque l'enveloppe externe et le couvercle sont tous deux constitués dans un matériau conducteur électriquement.

La présence du joint est plus particulièrement nécessaire lorsque le couvercle et l'enveloppe externe sont électriquement conductrices.

Le procédé peut également comprendre, préalablement à l'étape de fermeture, une étape consistant à déposer une couche de matériau électriquement conducteur sur la face périphérique extérieure de l'enveloppe externe, au moins sur une zone de couplage de l'enveloppe. L'enveloppe permet ainsi d'isoler électriquement les deux bornes de l'ensemble sans l'aide d'un joint. Alternativement, on peut se passer d'une telle étape en évitant la présence d'un joint en utilisant un matériau multicouches comprenant au moins une couche interne isolante électriquement et une autre couche conductrice électriquement

Le procédé comprend également, préalablement à l'étape de fermeture, une étape d'imprégnation d'un élément capacitif destiné à être logé dans l'enveloppe externe.

### BREVE DESCRIPTION DES FIGURES

D'autres caractéristiques, buts et avantages de la présente invention ressortiront encore de la description qui suit, laquelle est purement illustrative et non limitative et doit être lue au regard des dessins annexés sur lesquels :
- la figure 1 illustre schématiquement des étapes du procédé selon l'invention,
- la figure 2 est une représentation en perspective d'un couvercle d'un ensemble selon un mode de réalisation de l'invention,
- la figure 3 est une représentation en coupe d'une partie d'un ensemble assemblé avec un procédé selon l'invention à partir du couvercle de la figure 2 ;
- la figure 4 représente schématiquement un exemple de dispositif de fabrication permettant la mise en oeuvre du procédé selon l'invention.

### DESCRIPTION DETAILLEE DE L'INVENTION

On va maintenant décrire plus en détail les différents objets selon l'invention en référence aux figures. Dans ces différentes figures, les éléments équivalents du procédé et du dispositif portent les mêmes références numériques.

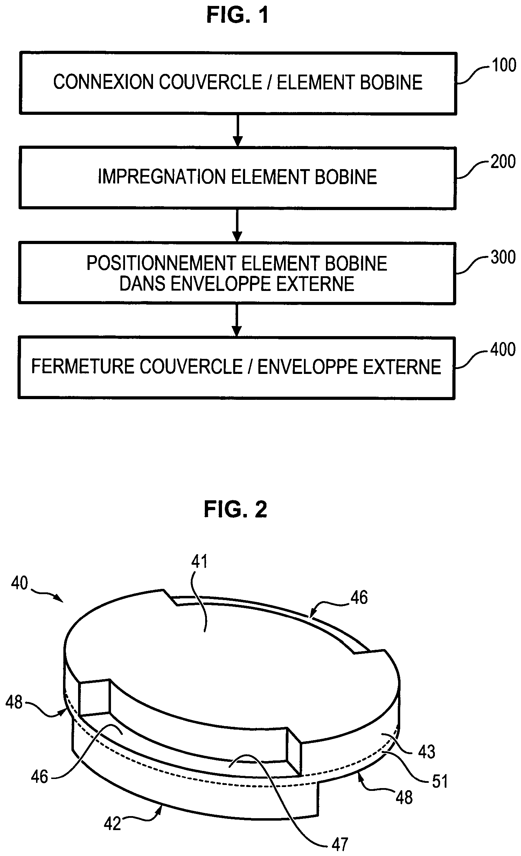

En référence à la figure 1, on a illustré un exemple de réalisation du procédé selon l'invention. Ce procédé permet de fabriquer un ensemble de stockage d'énergie électrique comprenant un élément bobiné 30, une enveloppe externe 20 ouverte à l'une de ses extrémités et un couvercle 40.

La première étape (référencée 100) consiste à connecter le couvercle 40 et l'élément bobiné 30. Le couvercle 40 est disposé sur l'élément bobiné 30 et une soudure - telle qu'une soudure laser par transparence - est réalisée à l'interface entre le couvercle 40 et l'élément bobiné 30.

La deuxième étape (référencée 200) consiste à imprégner l'élément bobiné connecté au couvercle dans un électrolyte.

La troisième étape (référencée 300) consiste à disposer l'élément bobiné connecté au couvercle dans l'enveloppe externe.

La quatrième étape (référencée 400) consiste à fermer l'extrémité ouverte de l'enveloppe externe avec le couvercle. Le procédé peut comprendre différentes variantes de l'étape de fermeture, par exemple en fonction des matériaux constituant le couvercle et l'enveloppe externe.

Ces différentes variantes seront décrites dans la suite et comprennent dans tous les cas l'application d'une force de compression à l'enveloppe de sorte qu'elle s'encastre mécaniquement dans le couvercle. L'application d'une force de compression peut par exemple être obtenue en générant une impulsion magnétique.

L'homme du métier appréciera que l'étape d'imprégnation peut être mise en oeuvre préalablement à l'étape de fermeture. En effet, l'étape de fermeture est réalisée (presque) à froid de sorte que les risques d'enflammer l'électrolyte sont limités. Elle pourrait toutefois également être réalisée après l'étape de fermeture.

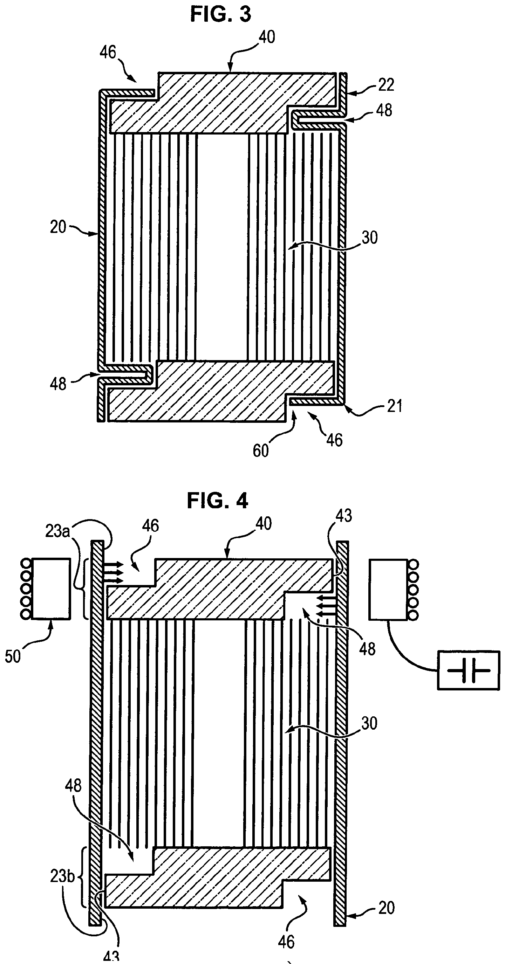

En référence à la figure 3, on a illustré un ensemble de stockage d'énergie fabriqué en mettant en oeuvre un mode de réalisation du procédé selon l'invention.

L'ensemble de stockage comprend une enveloppe externe 20, un élément bobiné 30 et deux couvercles 40.

L'enveloppe externe 20 est un tube ouvert à ses deux extrémités.

Chaque couvercle 40 représenté plus en détail à la figure 2, présente les caractéristiques suivantes.

Il présente une forme générale cylindrique avec deux parois d'extrémité 41 (extérieure) et 42 (intérieure), formant notamment les bases du cylindre, et une paroi latérale 43. Ce couvercle comprend, une première série de cavités 46 débouchant à la fois sur la paroi latérale et sur la paroi d'extrémité extérieure 41 et une deuxième série de cavités 48 débouchant à la fois sur la paroi latérale 43 et sur la paroi d'extrémité intérieure 42. Comme on le voit sur la figure 2, ces cavités ne s'étendent pas sur tout le pourtour du couvercle mais sont en quinconce ou décalées angulairement, à savoir que les cavités de la première série s'étendent dans une première portion de la paroi latérale alors que les cavités de la deuxième série s'étendant dans une deuxième portion de la paroi latérale distincte de la première série sans se chevaucher. Ainsi, la paroi de fond 47 de la première série de cavités 46 forme un premier épaulement axial alors que la paroi de fond 49 de la deuxième série de cavités 48 forme un deuxième épaulement axial opposé, ces épaulements permettant, comme on le voit sur la figure 4, d'immobiliser l'enveloppe externe et le couvercle l'un par rapport à l'autre au moins axialement, lorsque l'ensemble a été soumis au procédé selon l'invention décrit en détail par la suite et que l'enveloppe 20 a été déformée pour épouser la forme du couvercle. Ce mode de réalisation est avantageux car il diminue l'encombrement du couvercle tout en simplifiant sa fabrication.

Les épaisseurs (selon la direction normale aux parois d'extrémités) des cavités 46, 48 des première et deuxième séries sont égales, et chacune de ces épaisseurs est inférieure à la moitié de la hauteur selon cette direction du couvercle de sorte que la paroi latérale du couvercle comprend une portion centrale 51 s'étendant sur tout son pourtour entre les cavités et permettant d'assurer facilement l'étanchéité de la liaison couvercle/enveloppe. Toutefois, les épaisseurs des différentes cavités (de la même série ou des deux séries) peuvent être différentes. La somme des épaisseurs d'au moins une cavité de la première série et d'au moins une cavité de la deuxième série peut également être supérieure à la hauteur du couvercle, ce qui permet encore une plus grande diminution d'épaisseur.

On notera que le couvercle de la figure 2 comprend une première série de cavités et une deuxième série de cavités s'étendant sur une portion angulaire totale de la paroi latérale du couvercle environ équivalente. Toutefois, la somme des portions angulaires des cavités d'une des séries, notamment la première, peut être supérieure à la somme des portions angulaires des cavités de l'autre série. Le nombre des cavités de chaque série peut également varier. Le nombre des cavités de la première série peut également être différent du nombre de cavités de la deuxième série.

De même, les cavités 46, 48 sont d'épaisseur selon la direction normale aux parois d'extrémité et de profondeur, selon la direction normale à la paroi latérale, constantes mais elles pourraient être d'épaisseur et/ou de profondeur variable.

Les couvercles 40 et l'enveloppe externe 20 sont réalisés dans un matériau conducteur électriquement, tel que du métal.

Dans l'exemple illustré à la figure 3, les deux extrémités de l'enveloppe externe ne sont pas fermées de manières identiques. En effet, l'ensemble de stockage comprend un joint annulaire 60 entre le couvercle 40 et l'extrémité inférieure 21 de l'enveloppe externe 20 alors qu'il ne comprend pas de joint entre le couvercle 40 et l'extrémité supérieure 22 de l'enveloppe externe 20.

On notera que l'enveloppe n'est pas non plus limitée à ce qui a été décrit. L'enveloppe peut par exemple comprendre une paroi latérale et être fermée à une de ses extrémités. Elle peut également ne pas être de section cylindrique mais parallélépipédique. Elle doit toutefois présenter une ou des parois latérales de forme complémentaire de celle de la paroi du couvercle.

Le procédé mis en oeuvre pour obtenir l'ensemble de stockage illustré à la figure 3 est le suivant :
- connecter (positionner et souder) les couvercles 40 sur l'élément bobiné 30,
- imprégner l'élément bobiné 30 connecté aux couvercles 40 dans un électrolyte,
- disposer l'élément bobiné 30 connecté aux couvercles 40 dans l'enveloppe externe 20, puis
- pour l'extrémité inférieure 21 de l'enveloppe externe 20 :
   ∘ positionner le joint annulaire 60 sur le couvercle 40 (ou entre l'enveloppe externe et le couvercle),
   ∘ générer une force magnétique pulsée au niveau de l'extrémité inférieure 21 de l'enveloppe externe 20 pour déformer celle-ci de sorte qu'elle épouse la forme de la face périphérique du couvercle 40 et soit encastrée mécaniquement dans celui-ci,
- pour l'extrémité supérieure 22 de l'enveloppe externe 20 :
   ∘ générer une force magnétique pulsée au niveau de l'extrémité supérieure 22 pour déformer celle-ci de sorte qu'elle épouse la forme de la face périphérique du couvercle 40 et soit soudée à celui-ci.

La liaison couvercle/enveloppe réalisée au niveau de l'extrémité inférieure 21 est un sertissage par impulsion magnétique alors que la liaison couvercle/enveloppe réalisée au niveau de l'extrémité supérieure 22 est une soudure par impulsion magnétique. L'homme du métier appréciera que la liaison couvercle/enveloppe réalisée au niveau de l'extrémité supérieure 22 pourrait être un sertissage par impulsion magnétique, même sans présence de joint. En effet, l'obtention d'une liaison de type soudage ou sertissage dépend des énergies utilisées pour effectuer la liaison. On notera que seule l'enveloppe est déformée car, la force étant appliquée sur tout le tour de l'ensemble et le couvercle étant une pièce massive, il ne subit pas de déformation substantielle, au contraire de l'enveloppe possède un vide central et peut donc se contracter au niveau de ce vide.

On a également illustré sur la figure 4 un mode de réalisation d'un dispositif pour la mise en oeuvre du procédé décrit précédemment. Le dispositif comprend un compresseur pour appliquer une force de compression sans contact à l'une des pièces constituant l'ensemble de stockage d'énergie. Ceci permet un encastrement mécanique du couvercle et de l'enveloppe externe pour fermer l'ensemble de stockage par coopération de forme entre l'enveloppe externe et le couvercle.

Dans le mode de réalisation illustré à la figure 4, le compresseur consiste en un inducteur - tel qu'une bobine - apte à appliquer une force magnéto-mécanique sans contact. L'inducteur est par exemple une bobine.

Le dispositif comprend un générateur (non représenté) relié à la bobine 50. L'ensemble de stockage à fermer est destiné à être mis en place au centre de la bobine 50 de sorte que les enroulements de la bobine l'entourent partiellement.

On va maintenant décrire le principe de fonctionnement du dispositif en référence à l'ensemble de stockage décrit précédemment comprenant :
- une enveloppe externe 20 comportant une face de couplage 23A, 23B (constituée par la face interne de la paroi latérale de l'enveloppe),
- deux couvercles 40 comportant chacun une zone de couplage constituée par la paroi latérale 43 du couvercle et les parois 47, 49 des cavités parallèles aux parois d'extrémité, chaque couvercle 40 étant destiné à être positionné au niveau des extrémités ouvertes de l'enveloppe externe, comme décrit précédemment.

Pour réaliser la fermeture de l'ensemble de stockage, les zones de couplage 23A, 43-47-49 ; 43B, 43-47-49 sont mises en regard l'une de l'autre.

Le couvercle 40 et l'enveloppe externe 20 sont provisoirement fixés l'un par rapport à l'autre. Cette fixation peut être mise en oeuvre à l'aide de divers moyens de fixation provisoire, comme par exemple le joint décrit en référence à la figure 4 et qui permet une adhérence suffisante du couvercle 40 sur l'enveloppe externe 20.

Le couvercle 40 et l'enveloppe externe 20 sont positionnés au centre de la bobine 50. Avantageusement seules les zones de couplage 23A, 23B ; 43-47-49 en regard peuvent être placées au centre de la bobine. En d'autres termes, on peut prévoir de ne disposer dans la bobine que la région de l'enveloppe dans laquelle sont superposées les surfaces périphériques de l'enveloppe externe et du couvercle. Cela évite en effet que l'enveloppe externe 20 ne soit compressée contre l'élément bobiné 30, endommageant éventuellement celui-ci.

Une fois l'ensemble de stockage positionné, le générateur (chargé) décharge une grande énergie sur un temps très court dans la bobine 50. La bobine est orientée pour que la force ait une direction essentiellement radiale.

La zone de couplage 23A, 23B de l'enveloppe externe 20 est alors projetée à grande vitesse en direction de la zone de couplage 43, 47, 49 du couvercle 40. La zone de couplage 23 de l'enveloppe externe 20 se conforme à la forme du couvercle et notamment des cavités 46, 48.

Le dispositif décrit en référence à la figure 4 permet de projeter la pièce externe sur la pièce interne à une vitesse de 150 à 600 m/s.

Les informations générales de fonctionnement du dispositif de génération de l'impulsion sont les suivantes :
- énergie maximum : 25kJ,
- fréquence : 15 kHz,
- Capacitance : 300 à 800µF,
- Tension : 5 - 6kV.

Le dispositif de génération de l'impulsion magnéto-mécanique peut être utilisé pour sertir ou souder en fonction des paramètres d'utilisation de celui-ci :
- puissance :
   ∘ sertissage : 8 kJ,
   ∘ soudage : 15 à 18 kJ,
- Ampérage :
   ∘ Sertissage : 150A-250A,
   ∘ Soudage : 450 à 600A.

La mise en oeuvre du procédé selon l'invention à l'aide d'une force magnéto mécanique permet la fabrication d'ensembles de stockage présentant des caractéristiques techniques particulières ne se retrouvant pas dans les ensembles de stockage obtenus à partir de procédés de fabrication antérieurs basés sur une soudure, un sertissage ou encore un collage. Notamment, l'ensemble de stockage obtenu en mettant en oeuvre le procédé et le dispositif selon l'invention ne présente pas de traces de contact avec un outil ayant servi à effectuer un sertissage mécanique. En effet, le sertissage par impulsion magnétique s'effectue sans outils mis en contact (contrairement au roulage) et sans changement d'état des métaux (contrairement à la soudure et au brasage). L'ensemble selon l'invention peut toutefois être assemblé par sertissage ou emboutissage mécanique.

On notera qu'une analyse fine par métallographie d'un ensemble de stockage obtenu en mettant en oeuvre l'étape de fermeture avec une force magnéto-mécanique permet d'observer de petites vaguelettes inhérentes à la propagation d'une onde de choc à l'interface de la soudure ou du sertissage. Par ailleurs, il n'y a pas de modification de l'orientation des grains au niveau de l'interface de soudure ou de sertissage, contrairement aux procédés de l'art antérieur mettant en oeuvre un sertissage mécanique.

L'homme du métier aura compris que de nombreuses modifications peuvent être apportées au dispositif et au procédé décrit ci-dessus sans sortir matériellement des nouveaux enseignements présentés ici. Il est donc bien évident que les exemples qui viennent d'être donnés ne sont que des illustrations particulières en aucun cas limitatives. Par conséquent, toutes les modifications de ce type sont destinées à être incorporées à l'intérieur de la portée des revendications jointes.

## Revendications

1. Couvercle (40) pour un ensemble de stockage d'énergie, destiné à être inséré à une extrémité d'une enveloppe (20) dans lequel est placé un élément capacitif (30) de l'ensemble, le couvercle comportant au moins une paroi latérale (43) destinée à être placée en regard d'au moins une paroi latérale de l'enveloppe et deux parois d'extrémité (41, 42), **caractérisé en ce qu'**une pluralité de cavités (46, 48) est ménagée dans le couvercle, au moins une première cavité (46) débouchant sur la ou les paroi latérale (43) et une paroi d'extrémité (41) et au moins une deuxième cavité (48) débouchant sur la ou les paroi latérale (43) et l'autre paroi d'extrémité (42), la ou les premières cavités (46) débouchant sur la ou les parois latérales (43) dans une ou des premières portions s'étendant sur une partie du pourtour de la ou des parois latérales alors que la ou les deuxièmes cavités (48) débouchent sur la ou les parois latérales (43) dans une ou des deuxièmes portions s'étendant sur une partie du pourtour de la ou des parois latérales.

2. Couvercle selon la revendication précédente, dans lequel les première et deuxième portions de la paroi latérale sont au moins partiellement décalées angulairement dans un plan correspondant à celui des parois d'extrémité.

3. Couvercle selon la revendication précédente, dans lequel les première et deuxième cavités (46, 48) sont disposées en quinconce.

4. Couvercle selon l'une quelconque des revendications précédentes, dans lequel la somme des épaisseurs d'au moins une première et d'une deuxième cavité selon une direction normale à au moins une paroi d'extrémité est supérieure à l'épaisseur du couvercle selon cette direction.

5. Couvercle selon l'une quelconque des revendications 1 à 3, dans lequel la ou les parois latérales du couvercle comprennent une partie centrale (51) s'étendant sur tout le pourtour de la ou des parois latérales (43) du couvercle et dépourvue de cavité.

6. Couvercle selon l'une quelconque des revendications précédentes, de forme générale cylindrique et dont les parois d'extrémités (41, 42) forment les bases du cylindre.

7. Couvercle selon l'une quelconque des revendications précédentes, réalisé au moins partiellement en un matériau électriquement conducteur, notamment un matériau métallique.

8. Ensemble (10) de stockage d'énergie comprenant un élément capacitif (30) logé dans une enveloppe externe (20) comportant au moins une paroi latérale entourant l'élément capacitif et ouverte à au moins une de ses extrémités, et au moins un couvercle (40), chaque couvercle étant inséré dans l'enveloppe à sa ou ses extrémités ouvertes, au moins un couvercle (40) étant selon l'une quelconque des revendications précédentes et le contour de la ou des parois latérales de l'enveloppe suivant le contour de la ou des parois latérales du couvercle.

9. Ensemble selon la revendication précédente, dans lequel l'enveloppe (20) est réalisée au moins partiellement en un matériau électriquement conducteur, notamment un matériau métallique.

10. Ensemble selon l'une quelconque des revendications 8 et 9, lequel comporte un joint (60) interposé entre la paroi latérale (43) du couvercle (40) et la paroi latérale de l'enveloppe.

11. Procédé de fabrication d'un ensemble de stockage d'énergie (10) selon l'une quelconque des revendications 8 à 10, comprenant :
- une enveloppe externe (20) comportant une zone de couplage (23A, 23B), l'enveloppe externe étant ouverte à au moins l'une de ses extrémités,
- au moins un couvercle (40) selon l'une quelconque des revendications 1 à 7 destiné à être inséré dans l'extrémité ouverte de l'enveloppe externe (20), le couvercle comportant une zone de couplage comprenant au moins une paroi (47, 49) d'une cavité (46, 48) du couvercle, le couvercle étant positionné de sorte que les zones de couplage soient en regard l'une de l'autre,
le procédé étant **caractérisé en ce qu'**il comprend une étape de fermeture consistant à appliquer une force de compression à l'enveloppe externe (20) de l'ensemble de stockage de sorte qu'elle vienne au contact du couvercle au niveau des zones de couplage (23A, 23B, 43, 47, 49) afin de fermer par coopération de forme l'extrémité ouverte de l'enveloppe externe avec le couvercle, ladite étape de fermeture consistant à appliquer une force magnéto-mécanique sans contact à l'enveloppe externe (20).

## Patentansprüche

1. Abdeckung (40) für eine Anordnung zur Speicherung elektrischer Energie, die bestimmt ist, an einem Ende eines Mantels (20) eingesetzt zu sein, in der ein kapazitives Element (30) der Anordnung platziert ist, wobei die Abdeckung mindestens eine Seitenwand (43), die bestimmt ist, gegenüber mindestens einer Seitenwand des Mantels platziert zu sein, und zwei Endwände (41, 42) aufweist, **dadurch gekennzeichnet, dass** eine Vielzahl von Hohlräumen (46, 48) in der Abdeckung ausgebildet ist, wobei mindestens ein erster Hohlraum (46) auf der Seitenwand (43) oder den Seitenwänden und einer Endwand (41) ausmündet und mindestens ein zweiter Hohlraum (48) auf der Seitenwand (43) oder den Seitenwänden und der anderen Endwand (42) ausmündet, wobei der erste Hohlraum oder die ersten Hohlräume (46) auf der Seitenwand oder den Seitenwänden (43) in einem ersten oder ersten Abschnitten ausmünden, der / die sich über einen Teil des Umfangs der Seitenwand oder Seitenwände erstreckt / erstrecken, wogegen der zweite Hohlraum oder die zweiten Hohlräume (48) auf der Seitenwand oder den Seitenwänden (43) in einem zweiten oder zweiten Abschnitten ausmünden, der / die sich über einen Teil des Umfangs der Seitenwand oder Seitenwände erstreckt / erstrecken.

2. Abdeckung nach vorangehendem Anspruch, wobei der erste und zweite Abschnitt der Seitenwand mindestens teilweise in einer Ebene, die der der Endwände entspricht, winklig versetzt sind.

3. Abdeckung nach vorangehendem Anspruch, wobei der erste und zweite Hohlraum (46, 48) beliebig angeordnet sind.

4. Abdeckung nach einem der vorangehenden Ansprüche, wobei die Summe der Stärken von mindestens einem ersten und einem zweiten Hohlraum gemäß einer senkrechten Richtung zu mindestens einer Endwand größer als die Stärke der Abdeckung gemäß dieser Richtung ist.

5. Abdeckung nach einem der Ansprüche 1 bis 3, wobei die Seitenwand oder die Seitenwände der Abdeckung einen zentralen Teil (51) umfasst / umfassen, der sich über den gesamten Umfang der Seitenwand oder der Seitenwände (43) der Abdeckung erstreckt und keinen Hohlraum aufweist.

6. Abdeckung nach einem der vorangehenden Ansprüche allgemein zylindrischer Form und deren Endwände (41, 42) die Basen des Zylinders bilden.

7. Abdeckung nach einem der vorangehenden Ansprüche, die mindestens teilweise aus einem elektrisch leitenden Material, insbesondere einem metallischen Material, hergestellt ist.

8. Anordnung (10) zur Speicherung von Energie, umfassend ein kapazitives Element (30), das in einem äußeren Mantel (20) ruht, aufweisend mindestens eine Seitenwand, die das kapazitive Element umgibt, und an mindestens einem seiner Enden offen ist, und mindestens eine Abdeckung (40), wobei jede Abdeckung in den Mantel an seinem offenen Ende oder offenen Enden eingesetzt ist, wobei mindestens eine Abdeckung (40) nach einem der vorangehenden Ansprüche ist und die Kontur der Seitenwand oder der Seitenwände des Mantels gemäß der Kontur der Seitenwand oder der Seitenwände der Abdeckung ist.

9. Anordnung nach vorangehendem Anspruch, wobei der Mantel (20) mindestens teilweise aus einem elektrisch leitenden Material, insbesondere einem metallischen Material, hergestellt ist.

10. Anordnung nach einem der Ansprüche 8 und 9, umfassend eine Dichtung (60) zwischen der Seitenwand (43) der Abdeckung (40) und der Seitenwand des Mantels.

11. Verfahren zur Herstellung einer Anordnung zur Speicherung von Energie (10) nach einem der Ansprüche 8 bis 10, umfassend:
- einen äußeren Mantel (20), aufweisend einen Kopplungsbereich (23A, 23B), wobei der äußere Mantel an mindestens einem seiner Enden offen ist,
- mindestens eine Abdeckung (40) nach einem der Ansprüche 1 bis 7, die bestimmt ist, in das offene Ende des äußeren Mantels (20) eingesetzt zu sein, wobei die Abdeckung einen Kopplungsbereich aufweist, umfassend mindestens eine Wand (47, 49) eines Hohlraums (46, 48) der Abdeckung, wobei die Abdeckung derart positioniert ist, dass die Kopplungsbereiche einander zugewandt sind,
wobei das Verfahren **dadurch gekennzeichnet ist, dass** es einen Verschlussschritt umfasst, der darin besteht, eine Kompressionskraft auf den äußeren Mantel (20) der Speicheranordnung derart anzuwenden, dass er im Bereich der Kopplungsbereiche (23A, 23B, 43, 47, 49) mit der Abdeckung in Kontakt kommt, um durch Formkooperation das offene Ende des äußeren Mantels mit der Abdeckung zu verschließen, wobei der Verschlussschritt darin besteht, eine kontaktlose magnetisch-mechanische Kraft auf den äußeren Mantel (20) anzuwenden.

## Claims

1. A cover (40) for an energy-storage unit, intended to be inserted at one end of an envelope (20) wherein a capacitive element (30) of the unit is placed, the cover comprising at least one lateral wall (43) intended to be placed opposite at least one lateral wall of the envelope and two end walls (41, 42), **characterized in that** a plurality of cavities (46, 48) is made in the cover, at least one first cavity (46) opening on the lateral wall or the lateral walls (43) and an end wall (41) and at least one second cavity (48) opening on the lateral wall or the lateral walls (43) and the other end wall (42), the first cavity or the first cavities (46) opening on the lateral wall or the lateral walls (43) in a first portion or first portions extending over part of the circumference of the lateral wall or lateral walls, while the second cavity or the second cavities (48) opens on the lateral wall or the lateral walls (43) in a second portion or second portions extending over part of the circumference of the lateral wall or lateral walls.

2. The cover according to the preceding claim, wherein the first and second portions of the lateral wall are at least partially offset angularly in a plane corresponding to that of the end walls.

3. The cover according to the preceding claim, wherein the first and second cavities (46, 48) are arranged staggered.

4. The cover according to any one of the preceding claims, wherein the sum of the thicknesses of at least one first and a second cavity in a normal direction to at least one end wall is greater than the thickness of the cover in this direction.

5. The cover according to any one of claims 1 to 3, wherein the lateral wall or the lateral walls of the cover comprise a central part (51) extending over the entire circumference of the lateral wall or lateral walls (43) of the cover and devoid of cavity.

6. The cover according to any one of the preceding claims, of general cylindrical form and whereof the end walls (41, 42) form the bases of the cylinder.

7. The cover according to any one of the preceding claims, made at least partially of electrically conductive material, especially metallic material.

8. An energy-storage unit (10) comprising a capacitive element (30) housed in an external envelope (20) comprising at least one lateral wall enclosing the capacitive element and open at at least one of its ends, and at least one cover (40), each cover being inserted in the envelope at its open end or its open ends, at least one cover (40) being according to any one of the preceding claims and the contour of the lateral wall or lateral walls of the envelope following the contour of the lateral wall or lateral walls of the cover.

9. The unit according to the preceding claim, wherein the envelope (20) is made at least partially of electrically conductive material, especially metallic material.

10. The unit according to any one of claims 8 and 9, which comprises a joint (60) interposed between the lateral wall (43) of the cover (40) and the lateral wall of the envelope.

11. A method for manufacture of an energy-storage unit (10) according to any one of claims 8 to 10, **characterized in that** it comprises:
- an external envelope (20) comprising a coupling zone (23A, 23B), the external envelope being open at at least one of its ends,
- at least one cover (40) according to any one of claims 1 to 7 intended to be inserted in the open end of the external envelope (20), the cover comprising a coupling zone comprising at least one wall (47, 49) of a cavity (46, 48) of the cover, the cover being positioned such that the coupling zones are opposite each other,
the method comprising a closing step consisting of applying a compression force to the external envelope (20) of the storage unit such that it comes into contact with the cover at the level of the coupling zones (23A, 23B, 43, 47, 49) to close the open end of the external envelope with the cover by cooperation of form, said closing step consisting in applying a contactless magneto-mechanical force to the external envelope (20).
